# EUROPEAN PATENT SPECIFICATION

(11) **EP 2 739 162 B1**
(45) Date of publication and mention of the grant of the patent: **17.06.2015**
(21) Application number: 12780813.7
(22) Date of filing: 01.08.2012
(51) Int. Cl.: A23L 1/00, A23L 1/32, A21D 13/00

(54) **FROZEN PREPARATION FOR SWEET SOUFFLÉS**
GEFRORENEN ZUBEREITUNG FÜR SCHMACKHAFTE SCHAUMSPEISEN
PRÉPARATION SURGELÉE DESTINÉE À DES SOUFFLÉS SUCRÉS

(30) Priority: 02.08.2011 FR 1157080; 02.08.2011 US 201161514077 P
(43) Date of publication of application: 11.06.2014
(73) Proprietor: Brule, René-Louis, 78590 Noisy Le Roi (FR)
(72) Inventor: Brule, René-Louis, 78590 Noisy Le Roi (FR)
(74) Representative: Agasse, Stéphane
(86) International application number: PCT/IB2012/002098
(87) International publication number: WO 2013/017958

(56) References cited:
- EP-A1- 0 469 654
- EP-A1- 1 166 635
- FR-A1- 2 346 987
- FR-A1- 2 744 882

## Description

The present invention relates to a method for producing a frozen preparation for a sweet soufflé, as well as the frozen preparation thus obtained. The invention also relates to a method for preparing a sweet soufflé from a frozen preparation, and the sweet soufflé thus obtained.

Sweet soufflés, also called cream dessert soufflés, are known as light preparations. Sweet soufflés generally include two basic elements, more specifically a custard and stiff peak egg whites. The egg whites are incorporated into the custard, then the mixture is poured into a soufflé dish and is then baked at 230°C for 15 to 20 minutes.

Due to the presence of stiff peak egg whites, the volume of the sweet soufflé increases at moderate heat. Soufflés are also known for having to be prepared at the last minute to prevent collapse. In fact, they must be served and consumed immediately after leaving the oven to avoid the problem of fallen soufflés, which are no longer presentable, and no longer have the desired gustatory qualities. The sweet soufflé therefore has the drawback of not being able to be prepared far in advance.

Sweet soufflés also have the drawback of being very difficult to freeze. Different proposals have been made to resolve this technical problem.

Patent FR2744882 proposes culinary compositions for sweet soufflés with a base of fruit purées and that do away with liquid, water or milk, egg yolks, and flour. These compositions are presented as being able to be frozen before cooking and being able to be cooked without defrosting. These compositions are essentially made up of meringue and are related to "blancmange."

Patent FR2346987 proposes a freezable culinary preparation. The invention lies in the incorporation of the custard into an uncooked cream puff paste before adding egg whites, resulting in a soufflé preparation that can be frozen. The culinary preparation is therefore made up of a homogenous mixture of a cooked custard, an uncooked cream puff paste, and stiff meringue egg whites.

The culinary preparation according to FR2346987 nevertheless has the drawback of not being able to be kept in the freezer for a long time. In fact, after a certain amount of time, for example a period of more than two months, said culinary preparation is altered by drying from the freezer. The preparation loses its gustatory and nutritional properties and is no longer edible. Furthermore, the soufflé preparation loses its lightness properties that characterize the sweet soufflé. The preservation of the soufflé preparation therefore needs to be improved.

The present invention therefore proposes a solution to the problem of preserving soufflés in the freezer for a longer period of time, for example longer than 2 months.

Quite often, chefs who wish to obtain egg whites with firmer stiff peaks are forced to allow the egg whites to age in the refrigerator for several days. The method according to the present invention makes it possible to obtain very firm stiff peak egg whites without having to leave the whites in the refrigerator before whipping them. The invention therefore has this other advantage.

The present invention thus proposes a method for making a frozen preparation for a sweet soufflé, comprising the following steps:
a) a base is prepared for a cream puff paste from least the following four ingredients: water or milk, fat, flour, and egg;
b) a custard is prepared from at least the following four ingredients: milk, sugar, flour, and egg yolk;
c) the custard obtained in step b) is incorporated into the cream puff paste base obtained in step a), and the mixture is kept in a double boiler at a temperature not to exceed 70°C;
d) egg whites are whipped to a stiff peaks stage;
e) a mixture of sugar and water is cooked at a temperature between 110 and 120°C, so as to obtain a caramel;
f) the hot caramel is poured on the stiff peak egg whites of step d), and they are mixed so as to obtain meringued egg whites;
g) the mixture obtained in step c) is removed from the double boiler, and the meringued egg whites obtained in step e) are incorporated into said hot mixture;
h) the mixture obtained in step g) is placed in a soufflé dish; and
i) the soufflé preparation is frozen immediately at a temperature of at least -10°C.

The inventor realized that implementing such a method makes it possible to preserve the sweet soufflé preparation in the freezer longer than the preparations of the prior art. More specifically, the method according to the invention uses a caramel, obtained from a mixture of sugar and water, cooked/heated at a temperature comprised between 110 and 120°C, which is poured on the stiff peak egg whites, then mixed with them. The inventor realized that this step made it possible to keep the sweet soufflé preparation according to the invention in the freezer for a longer period of time without losing the expected properties of a soufflé, in particular visual, gustatory, nutritional, and therefore edible properties of sweet soufflés.

According to the inventive method, the stiff peak egg whites thus obtained are very firm, which favors the mixing of the three components of the preparation according to the invention.

Such a method also makes it possible to obtain a more homogenous soufflé preparation, which favors conservation of the product.

The present invention therefore relates to a method for making a frozen sweet soufflé preparation. The term "freezable" may now be used as an equivalent for the term "frozen." The sweet soufflé preparation is in fact freezable and frozen.

According to a first step, a cream puff paste mixture is prepared from the following four ingredients: water or milk, fat, flour, and egg. These four ingredients make up the minimum necessary to prepare a cream puff paste. "Fat" primarily refers to butter, margarine, and vegetable fat. It may nevertheless be an edible oil or any food compositions including triglycerides. "Flour" primarily refers to wheat flour, for example the white flour used for pastries and cakes. It may for example be type 45 or 55 flour. Other ingredients may potentially be added to the cream puff paste mixture. In particular, these additional ingredients are in particular chosen from among salt, sugar, and flavorings.

It is important to note that the cream puff paste here is not cooked before it is mixed with the custard.

As an example, the ingredients for the cream puff paste are the following: 250 g of water or milk, 100 g of butter or margarine, 150 g of flour, and 250 g of eggs.

Another example of the ingredients necessary to prepare 1 liter of cream puff paste mixture according to the invention is the following: 1 liter of water, 15 g of caster sugar, 15 g of salt, 400 g of butter, 600 g of flour, 18 to 20 eggs.

The protocol for preparing the cream puff paste mixture is the following:
i) the liquid mixture, water or milk and fat, is brought to a boil;
ii) once boiling, it is removed from the heat, the flour is added all at once, and it is stirred vigorously;
iii) it is returned to the heat (high heat), and the obtained paste is dried for several minutes, for example 2 to 3 minutes or 3 to 4 minutes; and
iv) it is removed from the heat, and the eggs are added one after the other.

The second step of the method according to the invention consists of preparing a custard from the following four ingredients: milk, sugar, flour, and egg. These four ingredients make up the minimum necessary to prepare a custard. Other ingredients may potentially be added to the custard. More specifically, these additional ingredients are in particular chosen from flavorings and natural juices, for example reduced by cooking.

As an example, a custard is prepared from the following ingredients: 1 l of milk (skim, half-cream, or whole), 10 egg yolks, 250 g of caster sugar, and 115 g of flour.

The protocol for preparing the custard is as follows:
i) half of the sugar is mixed with the egg yolks, then the flour is added;
ii) the milk is brought to a boil, then the other half of the sugar is added;
iii) the sugared milk is added to the mixture obtained in step i) while stirring;
iv) the mixture obtained in step iii) is boiled until the custard is cooked.

The third step consists of incorporating the custard obtained in the second step of the method into the cream puff paste base obtained in the first step of the method, then keeping the mixture in the double boiler at a temperature below 70°C. For example, the mixture may be kept at a temperature comprised between 40 and 60°C. Advantageously, the mixture is kept at approximately 60°C. It will be noted that in the inventive method, the custard is incorporated into the cream puff paste, so as to obtain a completely homogenous mixture, but it is also possible to incorporate the cream puff paste into the custard.

According to one aspect of the invention, it is possible to add one or more additional ingredients to the mixture obtained in the third step. These ingredients are intended to give the sweet soufflé a particular flavor. These additional ingredients are in particular chosen from among chocolates (e.g. dark, white, milk chocolate), cocoas (e.g. cocoa powders, cocoa paste), alcohols (e.g. Grand Marnier, Kirsch, Cognac), liqueurs, scents, flavors (e.g. vanilla, coffee), spices (e.g. cinnamon), fruit purees (e.g. stewed apples, raspberry and blackcurrant purée, raspberry pulp), natural products (e.g. essences, e.g. essence of coffee or raspberry), and natural juices, for example reduced by cooking.

The fourth step of the method according to the invention consists of whipping the egg whites to the stiff peaks stage. A pinch of salt may be added to facilitate the process.

The fifth step of the method consists of heating or cooking a mixture of sugar and water at a temperature comprised between 110 and 120°C, so as to obtain a caramel.
It is important, according to the invention, to prepare the caramel at a temperature comprised between 110 and 120°C, these extremes being comprised in a temperature range applicable to the method. The mixture of sugar and water can for example be cooked/heated at a temperature of 111, 112, 113, 114, 115, 116, 117, 118 or 119 °C. According to one aspect of the invention, the caramel is prepared at a temperature comprised between 115 and 120°C, preferably a temperature of 115°C. The temperature of the caramel is monitored precisely using a sugar thermometer.

According to one aspect of the invention, the sugar:water weight ratio is comprised between 10:1 and 10:3. For example, 1 kg of sugar and 200 g of water are heated (sugar:water ratio of 5:1).

The egg whites whipped to the stiff peaks stage according to this process are firmer than the egg whites whipped to stiff peaks using a traditional process. This has the advantage of facilitating their mixing with other components of the soufflé.

The sixth step of the method consists of pouring the hot caramel over the stiff peak egg whites from the fourth step, so as to obtain meringued egg whites.

The method according to the invention therefore uses a hot caramel that is poured on the stiff peak egg whites, then mixing them. The invention realized that this step of the method made it possible to keep the preparation in the freezer for a longer period of time, while keeping the gustatory and nutritional properties of the product. Such a method therefore makes it possible to consider industrial production of the product obtained using the method and the marketing thereof. This is one significant advantage of the present invention.

Using such a step also makes it possible to obtain a more homogenous preparation for sweet soufflés.

The seventh step of the method consists of removing the cream puff paste-custard mixture (obtained in the third step of the method according to the invention) from the double boiler and incorporating the meringued egg whites previously prepared into that hot mixture.

According to an eighth step of the method according to the invention, the mixture obtained in the seventh step is placed in a soufflé bowl/dish/mold.

According to a ninth step, the soufflé preparation is frozen immediately at a temperature of at least -10°C.

According to one aspect of the invention, the preparation is frozen at a temperature comprised between -10°C and -20°C.

"Immediately" means that the preparation must not stay at room temperature for more than a half-hour, advantageously more than a quarter hour after the end of its preparation.

Freezing keeps the temperature at the center of the food at a negative temperature, for example -15°C or -18°C, which makes it possible to preserve it. Some foodstuffs are nevertheless capable of being kept longer than others, in particular depending on their ingredients. The inventor has now observed that adding a specific step to the usual soufflé preparation method led to improving the conservation time of the sweet soufflé preparation in the freezer, while preserving the expected properties of the dessert (in particular taste, consistency and appetence).

According to the invention, it is preferable to freeze the sweet soufflé preparation slowly, rather than quickly (or deep freezing).

According to one aspect of the invention, the custard:cream puff paste:meringued egg whites ratio is comprised between 2:3:3 and 3:4:4, determined from the weight of each ingredient in the finished product.

For information, the proportions of each basic component in the final preparation may be the following:

| | Custard | Cream puff paste | Meringued egg whites | Weight ratio |
|---|---|---|---|---|
| Mixture A | 100 g | 150 g | 150 g | 2:3:3 |
| Mixture B | 120 g | 150 g | 150 g | 2.4:3:3 |
| Mixture C | 150 g | 150 g | 180 g | 3:3:3.6 |
| Mixture D | 120 g | 120 g | 150 g | 3:3:3.75 |
| Mixture E | 120 g | 150 g | 180 g | 2:2.5:3 |
| Mixture F | 150 g | 100 g | 150 g | 3:2:3 |

The present invention also relates to a frozen sweet souffle preparation obtained using the manufacturing method according to the invention.

The frozen sweet soufflé preparation obtained using the method according to the present invention has the advantageous property of being able to be kept in the freezer longer than the preparations of the prior art. This property results directly from the manufacturing method for the freezable preparation.

The sweet soufflé preparation according to the present invention may potentially comprise food additives and/or preservatives. Food additives in particular include chemical preservatives (E200 to E297), which are used to extend the shelf life of the food. These may for example be mineral preservatives (sodium chloride, sodium and potassium nitrates and nitrites, sulfur dioxide and sulfites, carbon dioxide, hydrogen peroxide or perhydrol) or organic preservatives (saturated fatty acids and sodium salts, potassium or calcium, sorbic acid and calcium, sodium, and potassium sorbates, benzoic acid and its derivatives, the other organic acids, alcohols, phenolic antioxidants).

According to one aspect of the present invention, the sweet soufflé preparation according to the present invention has no preservatives.

According to another aspect of the invention, the frozen sweet soufflé preparation comprises an alcoholic liqueur or an alcoholic liqueur extract.

The present invention also relates to a method for preparing a sweet soufflé from a frozen preparation according to the invention, consisting of heating said preparation to a temperature comprised between 180 and 250°C, preferably between 200 and 230°C for a length of time that depends on the weight of the frozen preparation. For example, a soufflé preparation placed in a soufflé dish with a diameter comprised between 6.5 and 8 cm must be baked at approximately 200°C for 15 to 18 min. According to another example, a soufflé preparation comprising chocolate placed in a soufflé bowl with a diameter of between 6.5 and 8 cm must be baked at approximately 200°C for 20 to 25 minutes.

According to one aspect of the invention, the frozen soufflé preparation is taken out of the freezer approximately 20 minutes before it is baked in the oven. This means that the frozen preparation remains at room temperature for a certain period of time before being placed in the oven.

According to another aspect of the invention, the soufflé preparation is taken out of the freezer at the last minute, then placed in a microwave oven (in particular, defrost mode) for a very short period of time (for example, less than 2 minutes) before being baked in the traditional oven. This has an obvious advantage relative to the service time, in particular in a fast food setting, in situations where customers wish to be served very quickly, or in situations where customers do not wish to order their desert far enough in advance to use the traditional method (20 minutes at ambient temperature).

According to still another aspect of the present invention, the frozen preparation is placed in a soufflé dish measuring 6 to 10 cm in diameter, and is baked until the soufflé reaches a height of 1 to 6 cm.

The invention also relates to a sweet soufflé obtained using the method described above.

Lastly, the invention relates to the use of a caramel obtained by heating a mixture of sugar and water at a temperature comprised between 110 and 120°C to prepare meringued egg whites to manufacture a frozen sweet soufflé preparation.

### Examples

### Example 1

A frozen sweet soufflé preparation is made from the following mixture of ingredients:
- 100 g of custard
- 150 g of cream puff paste
- 150 g of meringued egg whites
- Alcohol, for example Grand Marnier or Cognac (5 to 20 cl) or flavor, for example coffee or vanilla
According to this example, the custard:cream puff paste:meringued egg whites ratio is 2:3:3, determined from the weight of each ingredient in the finished product.

### Example 2

A frozen sweet soufflé preparation is made from the following mixture of ingredients:
- 150 g of custard
- 150 g of cream puff paste
- 150 g of meringued egg whites
- Alcohol, for example Grand Marnier or Cognac or flavor, for example coffee or vanilla
According to this example, the custard:cream puff paste:meringued egg whites ratio is 1:1:1, determined from the weight of each ingredient in the finished product.

### Example 3

A frozen sweet soufflé preparation is made from the following mixture of ingredients:
- 100 g of custard
- 150 g of cream puff paste
- 180 g of meringued egg whites
- 50 g of pureed raspberries and blackcurrant
According to this example, the custard:cream puff paste:meringued egg whites ratio is 1:1.5:1.8, determined from the weight of each ingredient in the finished product.

### Protocol for making the soufflé preparation

1. Preparation of one liter of mixture for cream puff paste
   i) bring 1 liter of water and 400 g of butter to a boil;
   ii) once boiling, remove from heat, add 600 g of flour all at once, and stir vigorously;
   iii) return to high heat and dry the obtained paste for 2 to 3 minutes; and
   iv) remove from heat and add 18 eggs one after the other (2 by 2).
2. Preparation of one liter of custard
   i) 125 g of sugar is mixed with 10 egg yolks, then 115 g of flour is added;
   ii) 1 liter of milk is brought to a boil, then 125 g of sugar is added;
   iii) the sugared milk is gradually poured over the mixture obtained in step i) while stirring;
   iv) the mixture obtained in step iii) is brought to a boil (gas or electric) until the custard is cooked. Once boiling starts, the preparation is cooked for 2 to 3 minutes.
3. Mixture of the cream puff paste and the custard
   The third step consists of incorporating a predetermined quantity of custard (for example, 100 g) obtained in the second step of the method according to the invention into a predetermined quantity of cream puff paste base (for example, 150 g) obtained in the first step of the inventive method, then keeping the mixture in a double boiler at a temperature of 60°C. If an additional ingredient is required (for example, 10 to 20 g of chocolate), it is added in that step of the method.
4. Preparation of one and one half liters of stiff peak egg whites, or approximately 48 egg whites
   The egg whites are whipped to the stiff peaks stage using a whisk, after adding a pinch of salt.
5. Preparation of the caramel
   1 kg of sugar and 200 g of water are mixed (sugar:water ratio of 5:1) and the mixture is heated/cooked at a temperature of 115°C, so as to obtain a caramel. The temperature of the caramel is monitored using a sugar thermometer.
6. Preparation of the meringued egg whites.
   The caramel is poured over the stiff peak egg whites and they are mixed.
7. Finishing the freezable preparation
   The cream puff paste-custard mixture is removed from the double boiler, and the alcohols, flavors or fruit purees, then the predetermined quantity (for example 150 g or 180 g) of meringued egg whites previously prepared) are incorporated into that hot mixture.
   The mixture thus obtained is placed in a soufflé bowl/mold/dish with a diameter of 8 cm and an approximate capacity of 135 cm³. The inside of the soufflé bowl is coated beforehand with grease (butter or margarine), then caster or granulated sugar.
   The soufflé bowl containing the soufflé preparation is then immediately placed in the freezer (-15°C).
   The dish is then kept at a temperature of -18°C for 8 months.

Protocol for preparing the soufflé from a frozen preparation
The soufflé preparation is taken out of the freezer at the last minute (before being served), then placed in the microwave oven (defrost setting) for 1 minute and 20 seconds before being baked in the traditional oven for 16 min.
The soufflé thus obtained preserves its visual and gustatory properties.

## Claims

1. A method for making a frozen preparation for a sweet soufflé, comprising the following steps:
a) a base is prepared for a cream puff paste from least the following four ingredients: water or milk, fat, flour, and egg;
b) a custard is prepared from at least the following four ingredients: milk, sugar, flour, and egg yolk;
c) the custard obtained in step b) is incorporated into the cream puff paste base obtained in step a), and the mixture is kept in a double boiler at a temperature not to exceed 70°C;
d) egg whites are whipped to a stiff peaks stage;
e) a mixture of sugar and water is cooked at a temperature between 110 and 120°C, so as to obtain a caramel;
f) the hot caramel is poured on the stiff peak egg whites of step d), and they are mixed so as to obtain meringued egg whites;
g) the mixture obtained in step c) is removed from the double boiler, and the meringued egg whites obtained in step e) are incorporated into said hot mixture;
h) the mixture obtained in step g) is placed in a soufflé dish; and
i) the soufflé preparation is frozen immediately at a temperature of at least -10°C.

2. The method according to claim 1, wherein step e) consists of cooking a mixture of sugar and water at a temperature comprised between 115 and 120°C.

3. The method according to claim 2, wherein step e) consists of cooking a mixture of sugar and water at a temperature of 115°C.

4. The method according to any one of the preceding claims, wherein the sugar:water weight ratio of step e) is comprised between 10:1 and 10:3.

5. The method according to any one of the preceding claims, wherein the custard:cream puff paste:meringued egg whites ratio is comprised between 2:3:3 and 3:4:4, determined from the weight of each ingredient in the finished product.

## Patentansprüche

1. Verfahren zur Herstellung einer gefrorenen Zubereitung für ein süßes Souffle, wobei das Verfahren die folgenden Schritte umfasst:
a) eine Basis wird für einen Windbeutelteig aus mindestens den folgenden vier Zutaten zubereitet: Wasser oder Milch, Fett, Mehl und Ei;
b) eine Eiercreme wird aus mindestens den folgenden vier Zutaten zubereitet: Milch, Zucker, Mehl und Eigelb;
c) die in Schritt b) erhaltene Eiercreme wird in die in Schritt a) erhaltene Windbeutelteigbasis eingebracht und die Mischung wird in einem Wasserbad bei einer Temperatur, die 70 °C nicht überschreiten darf, gehalten;
d) Eiweiß wird zu einem steifen Schnee geschlagen;
e) eine Mischung von Zucker und Wasser wird bei einer Temperatur zwischen 110 und 120 °C gekocht, um ein Karamell zu erhalten;
f) das heiße Karamell wird auf den steifen Eiweißschnee von Schritt d) gegossen und sie werden gemischt, um Eiweißbaiser zu erhalten;
g) die in Schritt c) erhaltene Mischung wird aus dem Wasserbad genommen und die in Schritt e) erhaltenen Eiweißbaiser werden in die heiße Mischung eingebracht;
h) die in Schritt g) erhaltene Mischung wird in eine Souffléform gegeben und
i) die Soufflezubereitung wird unmittelbar bei einer Temperatur von mindestens -10 °C eingefroren.

2. Verfahren nach Anspruch 1, wobei Schritt e) in dem Kochen einer Mischung von Zucker und Wasser bei einer Temperatur, die zwischen 115 und 120 °C liegt, besteht.

3. Verfahren nach Anspruch 2, wobei Schritt e) in dem Kochen einer Mischung von Zucker und Wasser bei einer Temperatur von 115 °C besteht.

4. Verfahren nach einem der vorhergehenden Ansprüche, wobei das Zucker:Wasser-Gewichtsverhältnis von Schritt e) zwischen 10:1 und 10:3 liegt.

5. Verfahren nach einem der vorhergehenden Ansprüche, wobei das Eiercreme:Windbeutelteig:Eiweißbaiser-Verhältnis zwischen 2:3:3 und 3:4:4 liegt, bestimmt aus dem Gewicht jeder Zutat in dem Endprodukt.

## Revendications

1. Procédé pour la fabrication d'une préparation surgelée pour un soufflé sucré, comprenant les étapes suivantes :
a) une base est préparée pour une pâte à choux à partir d'au moins les quatre ingrédients suivants : de l'eau ou du lait, de la matière grasse, de la farine et des oeufs;
b) une crème pâtissière est préparée à partir d'au moins les quatre ingrédients suivants : du lait, du sucre, de la farine et du jaune d'oeuf ;
c) la crème pâtissière obtenue dans l'étape b) est incorporée dans la base de pâte à choux obtenue dans l'étape a), et le mélange est maintenu dans un bain-marie à une température ne dépassant pas 70°C ;
d) les blancs d'oeufs sont fouettés en neige ferme ;
e) un mélange de sucre et d'eau est cuit à une température comprise entre 110 et 120°C, de manière à obtenir un sucre cuit ;
f) le sucre cuit chaud est versé sur les blancs d'oeufs montés en neige ferme de l'étape d), et ils sont mélangés de manière à obtenir des blancs d'oeufs meringués ;
g) le mélange obtenu dans l'étape c) est retiré du bain-marie, et les blancs d'oeufs meringués obtenus dans l'étape e) sont incorporés dans ledit mélange chaud ;
h) le mélange obtenu dans l'étape g) est placé dans un moule à soufflé ; et
i) la préparation de soufflé est immédiatement surgelée à une température d'au moins -10°C.

2. Procédé selon la revendication 1, dans lequel l'étape e) consiste à cuire un mélange de sucre et d'eau à une température comprise entre 115 et 120°C.

3. Procédé selon la revendication 2, dans lequel l'étape e) consiste à cuire un mélange de sucre et d'eau à une température de 115°C.

4. Procédé selon l'une quelconque des revendications précédentes, dans lequel le rapport en poids sucre : eau de l'étape e) est compris entre 10 : 1 et 10:3.

5. Procédé selon l'une quelconque des revendications précédentes, dans lequel le rapport crème pâtissière : pâte à choux : blancs d'oeuf meringués est compris entre 2 : 3 : 3 et 3 : 4 : 4, déterminé à partir du poids de chaque ingrédient dans le produit fini.
